(19) Europäisches Patentamt
European Patent Office
Office européen des brevets

(11) EP 2 466 348 A1

(12) **EUROPEAN PATENT APPLICATION**
published in accordance with Art. 153(4) EPC

(43) Date of publication:
**20.06.2012 Bulletin 2012/25**

(21) Application number: **10808052.4**

(22) Date of filing: **11.03.2010**

(51) Int Cl.:
***G02B 5/30*** *(2006.01)* ***G02F 1/13363*** *(2006.01)*

(86) International application number:
**PCT/JP2010/001728**

(87) International publication number:
**WO 2011/018864 (17.02.2011 Gazette 2011/07)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.08.2009 JP 2009185512**

(71) Applicant: **JX Nippon Oil & Energy Corporation**
**Chiyoda-ku**
**Tokyo 100-8162 (JP)**

(72) Inventors:
- **AIZONO, Hirofumi**
**Tokyo, 1008162 (JP)**
- **HIRAI, Tomoo**
**Tokyo, 1008162 (JP)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

# (54) LIQUID-CRYSTAL FILM AND OPTICAL ELEMENT OBTAINED USING SAME

(57) The present invention provides a liquid crystal film which comprises a liquid crystal layer having excellent retainability of homeotropic alignment and which has excellent interlayer adhesion between a cycloolefin polymer (COP) film and the liquid crystal layer. The liquid crystal film is produced by aligning homeotropically a liquid crystalline composition containing a (meth)acrylic compound having an oxetane group and fixing the composition in a homeotropic alignment by polymerizing the oxetane group directly on the COP film. The liquid crystal film is excellent in interlayer adhesion. The present invention also provides an optical element produced using the liquid crystal film.



Printed by Jouve, 75001 PARIS (FR)

## Description

### Technical Field

The present invention relates to liquid crystal films wherein a liquid crystal layer is homeotropically aligned and then fixed directly on a cycloolefin polymer (hereinafter referred to as "COP") film having no alignment film as well as optical elements using the films.

### Background Art

An optical film having a refractive anisotropy has been used to improve the image quality of a liquid crystal display device and thus has had an industrially important role. The film having a refractive anisotropy can be broadly classified into those produced by stretching plastic films and those produced by aligning liquid crystal liquid crystal materials. The latter have a potential that they can achieve various refractive structures and thus are worthy of more attention. An aligned film produced by aligning a liquid crystal polymer exhibits revolutionary performances as a color compensator or a viewing angle improver for a liquid crystal display device and has contributed to the development of liquid crystal devices that have higher performance, and reduced in weight and thickness.

For example, a film having a larger refractive index in the thickness direction is considered to be effective in improving the viewing angle of a liquid crystal display. The use of a homeotropically aligned (vertical alignment) liquid crystal material is considered to be easier to produce such a film. Homeotropic alignment of liquid crystal molecules is to align the longitudinal axis direction of liquid crystal molecules substantially vertical with respect to a substrate. It is well-known that homeotropic alignment is obtained by applying an electric field to a pair of glass substrate between which liquid crystal material is placed. However, it is very difficult to form the aligned liquid crystal material into a film, and the method that have been reported so far have some problems.

For example, in Patent Literatures 1 and 2, a film is produced by aligning homeotropically a main chain type liquid crystal polymer and then glass-fixing the polymer. However, since the liquid crystal polymer aligns in the thickness direction in the homeotropic alignment, cracks could likely occur in the plane. Measures to strengthen the material by cross-linking or the like were not taken in these patent literatures .

Patent Literature 3 describes that a side chain type liquid crystal polymer aligned homeotropically is fixed on a substrate without using a vertical alignment film, but has a problem that this is not sufficient to maintain the liquid crystal polymer in a homeotropic alignment at elevated temperatures because of the low glass transition temperature (Tg) of the film. In order to solve this problem, Patent Literature 4 describes that a polymerizable low molecular weight liquid crystal material is added to a side chain type liquid crystal polymer. However, since the low molecular weight liquid crystal material is homopolymerized, there is a limit to reinforce the homeotropic alignment.

The COP film is unlikely adhesive among transparent films, and can not be easily laminated with a liquid crystal material. In order to solve this problem, Patent Literature 5 proposes a method wherein a polymer laminate with an excellent adhesivity is disposed on a COP film. However, addition of the polymer laminate increases the number of production steps and production cost and further the thickness of the resulting laminate. This method is not preferable under current circumstances where a laminate configuration that is made thinner as much as possible has been required.

In Patent Literature 6, a polymer of aliphatic hydrocarbon acrylate monomer is included in a liquid crystal material having a homeotropic alignability such that adhesivity between the liquid crystal material and a COP film is improved. There is, however, a problem that the homeotropic alignability is deteriorated because the Tg of the liquid crystal material is decreased.

### Citation List

### Patent Literature

Patent Literature 1: Japanese Patent No. 2853064
Patent Literature 2: Japanese Patent No. 3018120
Patent Literature 3: Japanese Patent No. 3788734
Patent Literature 4: Japanese Patent No. 4174192
Patent Literature 5: Japanese Patent Laid-Open Publication No. 2008-9328
Patent Literature 6: Japanese Patent Laid-Open Publication No. 2008-9346

## Summary of Invention

### Technical Problem

The present invention has an object to provide a liquid crystal film, which can be produced stably without requiring complicated processes such as light emission under an inert gas atmosphere and is excellent in retainability of alignment after being aligned and fixed and in interlayer adhesion between a COP film and a liquid crystal layer and also to provide an optical element produced using the liquid crystal film.

### Solution to Problem

After an extensive research and study to solve the above-described problems, the present invention has been accomplished. That is, the present invention relates to the following.

[1] A liquid crystal film comprising a liquid crystal layer aligned homeotropically and then fixed directly on a cycloolefin polymer film having no alignment film, the liquid crystal layer being formed by aligning homeotropically a liquid crystalline composition containing a (meth)acrylic compound having an oxetane group and fixing the composition in a homeotropic alignment by polymerizing the oxetane group.

[2] The liquid crystal film according to [1], wherein the (meth)acrylic compound having an oxetane group is one or more compounds selected from those represented by formulas (1), (2) and (3):

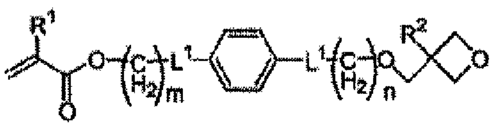

(1)

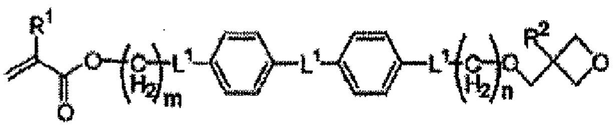

(2)

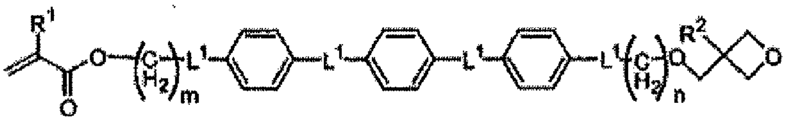

(3)

wherein each $R^1$ is independently hydrogen or methyl, each $R^2$ is independently hydrogen, methyl or ethyl, each $L^1$ is independently a single bond, -O-, -O-CO- or -CO-O-, m is independently an integer of 1 to 10, and n is independently an integer of 0 to 10.

[3] The liquid crystal film according to [1], wherein the homeotropically aligned liquid crystal layer satisfies the following requirements (a) and (b):

(a) $0\ nm \leq Re \leq 50\ nm$
(b) $-500\ nm \leq Rth \leq 30\ nm$

wherein Re is the retardation value in the plane of the homeotropically aligned liquid crystal layer, Rth is the retardation value in the thickness direction of the homeotropically aligned liquid crystal layer, and the Re and Rth are given by $Re=(Nx-Ny)\times d$ [nm] and $Rth=\{(Nx+Ny)/2-Nz\}\times d$ [nm], respectively wherein d is the thickness of the homeotropically aligned liquid crystal layer, Nx and Ny are the main refractive indices in the plane of the homeotropically aligned liquid crystal layer, Nz is the main refractive index in the thickness direction of the homeotropically aligned liquid crystal layer, and $Nz>Nx\geq NY$.

[4] The liquid crystal film according to [1], wherein the liquid crystalline composition containing a (meth)acrylic compound having an oxetane group contains a photo cation generator and/or a thermal cation generator.

[5] An optical element produced using the liquid crystal film according to any of [1] to [4].

## Advantageous Effects of Invention

After a liquid crystalline composition containing a (meth)acrylic compound having an oxetane group is homeotropically aligned on a COP film, the oxetane group is polymerized so as to fix the homeotropic alignment directly on the COP film thereby producing a liquid crystal film, which is excellent in homeotropic alignability and interlayer adhesion between the COP film and the liquid crystal layer and is useful for an optical element.

## Description of Embodiments

The present invention will be described in detail below.
In the present invention, selection of materials constituting the liquid crystalline composition to be used is important for producing a liquid crystal film aligned and fixed homeotropically directly on a COP film.
The liquid crystalline composition used in the present invention is a composition exhibiting liquid crystallinity and comprising a (meth)acrylic compound having an oxetane group and a liquid crystalline compound. In the present invention, "methacryl" and "acryl" are collectively referred to as "(meth)acryl".
The (meth) acrylic compound having an oxetane group is preferably any of compounds represented by formulas (1), (2) and (3):
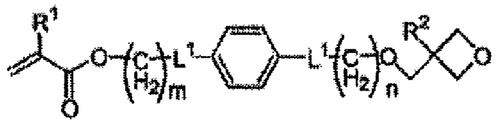

(1)

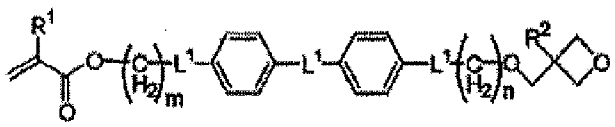

(2)

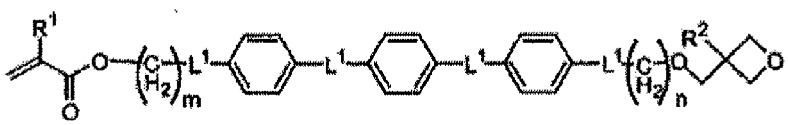

(3)

In formulas (1), (2) and (3), $R^1$ is independently hydrogen or methyl, $R^2$ is independently hydrogen, methyl or ethyl, $L^1$ is independently a single bond, -O-, -O-CO- or -CO-O-, m is independently an integer of 1 to 10, and n is independently an integer of 0 to 10. "$L^1$ is a single bond" means that groups bonding to each other via $L^1$ bond directly to each other, and for example, when A-$L^1$-B, A-B.
These compounds do not always exhibit liquid crystallinity. Compounds represented by formulas (1) to (3) may be used as a mixture of two or more compounds.
Compounds represented by formulas (1) to (3) include various compounds, but the following compounds are preferable:
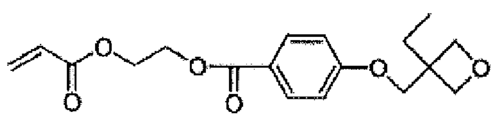

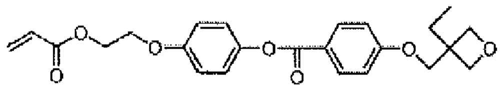

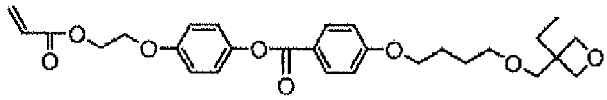

No particular limitation is imposed on the method of synthesizing these (meth)acrylic compounds having an oxetane group, which can, therefore, be synthesized using a conventional method used in the organic chemistry synthesis. For example, a site having an oxetane group is linked to a site having a (meth) acrylic group by the ether synthesis of Williamson or an ester synthesis using a condensing agent thereby synthesizing a (meth)acrylic compound having two completely different reactive groups that are the oxetane group and the (meth)acrylic group.

For the synthesis, it is necessary to select reaction conditions considering that under a strong acid condition, a side reaction such as polymerization or ring-opening may occur due to the cationic polymerizability of oxetane group.

Inclusion of a (meth) acrylic compound having an oxetane group in the liquid crystalline composition improves significantly adhesion between a COP film that is unlikely adhesive and the liquid crystal layer. Absence of a (meth) acrylic compound having an oxetane group in the liquid crystalline composition results in insufficient adhesion between a COP film and the liquid crystal layer. Although the reactions mechanism is not apparent, it is assumed that the (meth) acrylic compound having an oxetane group provide some intermediate action for adhesion between a COP film and the liquid crystalline composition that is not sufficient in affinity therewith.

The liquid crystalline compound constituting the liquid crystalline composition used in the present invention is any compound exhibiting liquid crystallinity except for the above-described (meth) acrylic compound having an oxetane group, and may be a liquid crystalline monomer having a polymerizable group, a main chain type liquid crystalline polymer or a side chain type liquid crystalline polymer.

Examples of the main chain type liquid crystalline polymer include polyester, polyesteramide, polyamide, polyamideimide, and polycarbonate. Examples of the side chain type liquid crystalline polymer include poly(meth)acrylate, polymalonate, polyether, and polysiloxane. Among these compounds, preferred are side chain type liquid crystalline polymers, and particularly preferred are side chain type liquid crystalline polymers represented by formula (4):

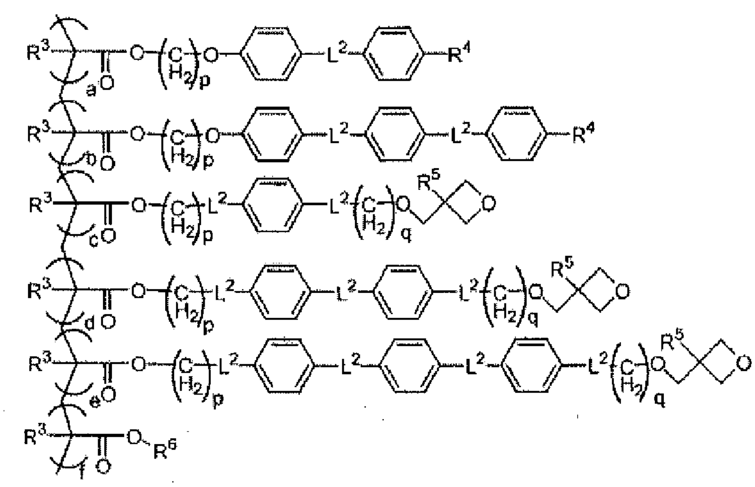

(4)

In formula (4), $R^3$ is independently hydrogen or methyl, $R^4$ is independently hydrogen, methyl, ethyl, butyl, hexyl, octyl, nonyl, decyl, dodecyl, methoxy, ethoxy, propoxy, butoxy, pentyloxy, hexyloxy, heptyloxy, octyloxy, decyloxy,

dodecyloxy, cyano, bromo, chloro, fluoro, or carboxyl, $R^5$ is independently hydrogen, methyl, or ethyl, $R^6$ is independently a hydrocarbon group having 1 to 24 carbon atoms, $L^2$ is independently a single bond, -O-, -O-CO-, -CO-O-, -CH=CH- or -C≡C-, p is independently an integer of 1 to 10, q is independently an integer of 0 to 10, and a, b, c, d, e and f are each a molar ratio of each unit in the polymer ($a+b+c+d+e+f=1$ provided that $c+d+e \neq 0$, and when units are different only in a substituent, the molar ratio is counted regarding they are the same units). In addition, the polymers need to exhibit liquid crystallinity.

The molar ratio of each unit in the polymer may not be restricted if the above requirements are satisfied, but is preferably the following:

a: preferably 0 to 0.80, more preferably 0.05 to 0.50
b: preferably 0 to 0.90, more preferably 0.10 to 0.70
c: preferably 0 to 0.50, more preferably 0.10 to 0.30
d: preferably 0 to 0.50, more preferably 0.10 to 0.30
e: preferably 0 to 0.50, more preferably 0.10 to 0.30
f: preferably 0 to 0.30, more preferably 0.01 to 0.10

$R^4$ is preferably hydrogen, methyl, butyl, methoxy, cyano, bromo, or fluoro, particularly preferably hydrogen, methoxy, or cyano. $L^2$ is preferably a single bond, -O-, -O-CO- or -CO-O-. $R^6$ is preferably a hydrocarbon group having 2, 3, 4, 6, 8 or 18 carbon atoms.

The above-described side chain type liquid crystalline polymer is easily synthesized by copolymerizing radically or anionically each component corresponding to the (meth)acrylic group of a (meth)acrylic compound. No particular limitation is imposed on the conditions of polymerization, which may be carried out under usual conditions.

The side chain type liquid crystalline polymer has a weight average molecular weight of preferably 1,000 to 200,000, particularly preferably 3,000 to 50,000. A side chain type liquid crystalline polymer having a weight average molecular weight deviating this range is not preferable because the film strength would be poor and alignability would be deteriorated.

The liquid crystalline composition used in the present invention may further contain a dioxetane compound represented by formula (5) below. The dioxetane compound of formula (5) may be used regardless of whether it has liquid crystallinity or not but preferably has liquid crystallinity.

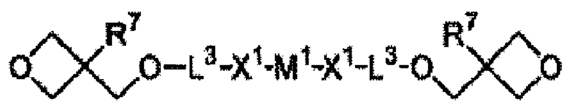

(5)

In formula (5), $R^7$ is independently hydrogen, methyl, or ethyl, $L^3$ is independently a single bond or $-(CH_2)_n-$ (n is an integer of 1 to 12), each $X^1$ is independently a single bond, -O-, -O-CO- or -CO-O-, $M^1$ is represented by formula (6) or (7), wherein $P^1$ is independently a group selected from formula (8), $P^2$ is a group selected from formula (9), $L^4$ is independently a single bond, -CH=CH-, -C≡C-, -O-, -O-CO- or -CO-O-:

$-P^1-L^4-P^2-L^4-P^1-$ (6)

$-P^1-L^4-P^1-$ (7)

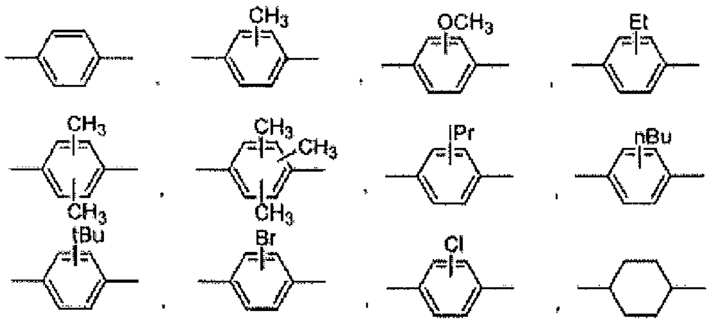

(8)

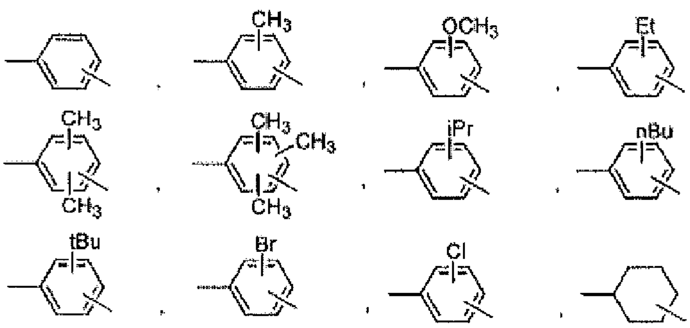

(9)

In formulas (8) and (9), Et, iPr, nBu and tBu represent ethyl, isopropyl, n-butyl, and tert-butyl, respectively.

In formula (5), the interconnecting groups coupling the $M^1$ group to the oxetanyl groups positioned on the right and left sides thereof may be different from one another (asymmetric) or the same (symmetric). The dioxetane compounds may exhibit different degree of liquid crystallinity depending on the structure but need not exhibit liquid crystallinity. Many compounds represented by formula (5) can be exemplified because of variation in combination of $L^3$, $X^1$ and $M^1$. However, preferable examples include the following compounds:

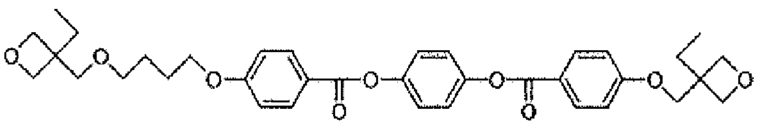

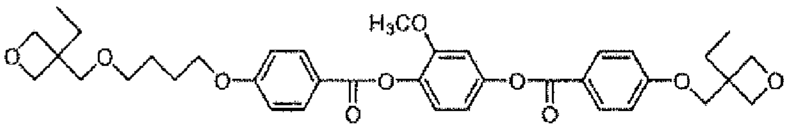

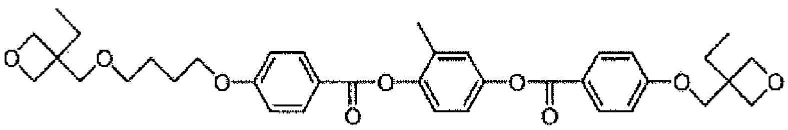

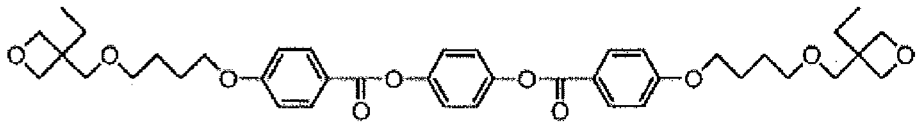

There is no particular restriction on the method of synthesizing these compounds because they can be synthesized in accordance with any conventional method utilized in the field of organic chemistry.

In the liquid crystalline composition used in the present invention, the composition (mass ratio) of the (meth) acrylic compound having oxetane group represented by formula (1) to (3), the liquid crystalline compound and the dioxetane compound represented by formula (5) added if necessary is the (meth)acrylic compound having oxetane group represented by formula (1) to (3): the liquid crystalline compound: the dioxetane compound represented by formula (5)=preferably 1 to 30:100:0 to 40, more preferably 3 to 20:100:0 to 30.

Beyond this range, a liquid crystal film can not be produced, which is excellent in retainability of homeotropic alignment and interlayer adhesion between a COP film and the liquid crystal layer.

After the liquid crystalline composition is aligned, it is fixed in a liquid crystal state by polymerizing the cationic polymerizable group contained therein to cross-link. The resulting liquid crystal film is improved in heat resistance. Therefore, in order to proceed with cation-polymerization easily and smoothly, preferably the liquid crystalline composition has contained a photo cation generator and/or a thermal cation generator in advance, which generate cations with external stimulus such as light or heat. If necessary, various types of sensitizers may be used in combination.

The photo cation generator denotes a compound that can generate cations by emitting a light of an appropriate wavelength. Examples of the photo cation generator include organic sulfonium salt-, iodonium salt-, and phosphonium salt-based compounds. Counter ions of these compounds are preferably antimonate, phosphate, and borate. Specific examples of the generator include $Ar_3S^+SbF_6^-$, $Ar_3P^+BF_4^-$, and $Ar_2I^+PF_6^-$ wherein Ar indicates a phenyl or substituted phenyl group. Sulfonic acid esters, triazines, diazomethanes, β-ketosulfones, iminosulfonates, and benzoinsulfonates may also be used.

The thermal cation generator is a compound that can generate cations by being heated to an appropriate temperature. Examples of the thermal cation generator include benzylsulfonium salts, benzylammonium salts, benzylpyridinium salts, benzylphosphonium salts, hydrazinium salts, carbonic acid esters, sulfonic acid esters, amineimides, antimony pentachloride-acetyl chloride complexes, diaryliodonium salt-dibenzyloxy coppers, and halogenated boron-tertiary amine adducts.

The amount of these cation generators to be added in the liquid crystalline composition varies depending on the structure of mesogen or spacer portion of a compound constituting the composition, the equivalent of the oxetane group, or the conditions of aligning the liquid crystalline composition. However, the amount is within the range of usually 100 ppm by mass to 20 percent by mass, preferably 1, 000 ppm by mass to 10 percent by mass, more preferably 0.5 percent by mass to 8 percent by mass, most preferably one percent by mass to 6 percent by mass on the basis of the mass of the side chain type liquid crystalline polymer. An amount of less than 100 ppm by mass is not preferable because polymerization may not proceed due to the insufficient amount of cations to be generated. An amount of more than 20 percent by mass is not also preferable because a large amount of the decomposed residue of the cation generator remains in the resulting liquid crystal film and thus the light resistance thereof would be degraded.

The liquid crystalline composition used in the present invention may contain various compounds that can be mixed to an extent that the liquid crystallinity of the composition is not impaired. Examples of such compounds include various polymerizable compounds having a radically polymerizable group such as vinyl or (meth)acryloyl group, or a cationically polymerizable group such as oxetane group (excluding the above-described compounds having an oxetane group), oxiranyl or vinyloxy group, compounds having a reactive group such as a carboxyl, amino or isocyanato group, and various polymeric compounds having a film formation capability. When a surfactant, a defoaming agent, and a leveling agent and furthermore, a compound, a low molecular weight liquid crystal compound or a polymeric liquid crystal compound, having reactive functional groups are used, an reaction initiator, an activating agent or a sensitizer that is suitable for each of the functional groups may be added to an extent that achievement of the object of the present invention is not deviated. The liquid crystalline composition having a reactive group is allowed to exhibit a desired alignment and then to react under conditions suitable for reacting the reactive group so as to cross-link or increase the molecular weight thereby enhancing the mechanical strength of the intended final product.

Next, the cycloolefin polymer (COP) film will be described.

The COP film is a film comprising COP as the main component and is preferably a film having retardation functions. COP is a collective general term of resins produced from cyclic olefins such as norbornene, tetracycolodecene, and derivatives thereof. Specific examples include ring-opening polymers of cyclic olefins, addition polymers of cyclic olefins, random copolymers of cyclic olefins and α-olefins such as ethylene and propylene, and graft-modified products produced

by modifying these polymers with unsaturated carboxylic acids or derivatives thereof. Hydrogenated products of these resins are also included. Examples of commercially available products include ZEONEX and ZEONOR manufactured by ZEON CORPORATION, ARTON manufactured by JSR CORPORATION, ESCENA manufactured by Sekisui Chemical Co., Ltd., Topas manufactured by Topas Advanced Polymers GmbH, and APEL manufactured by Mitsui Chemicals. These COP films may be a uniaxially stretched film or a biaxially stretched film. Uniaxial stretching is preferably longitudinal uniaxial stretching obtained utilizing the peripheral speed difference between two or more rollers or tenter stretching obtained by holding the sides of a polymer film and stretching it in the width direction. A polymer film may be stretched in the longitudinal and traverse directions to exhibit biaxial optical anisotropy. Alternatively, a polymer film stretched in the Z axis direction may also be used.

The retardation value of the COP film in the plane (hereinafter referred to as "Re1") is given by Re1=(nx-ny) xd1 [nm] wherein nx and ny are the main refractive indices in the plane, nz is the main refractive index in the thickness direction, and the thickness is d1 (nm), and varies on the intended purposes such as the use as a viewing angle improver for a liquid crystal display device and on the mode of a liquid crystal display device or various optical parameters even when used as a viewing angle improver. However, Re1 is usually from 30 to 500 nm, preferably from 50 to 400 nm with respect to a monochromatic light of 550 nm. The retardation value in the thickness direction (hereinafter referred to as "Rth1") is given by Rth1={(nx+ny)/2-nz}xd1 [nm] and adjusted to usually from 0 to 300 nm, preferably from 0 to 200 nm, more preferably from 0 to 150 nm. The thickness of the COP film is preferably from 10 to 400 μm, most preferably from 15 to 100 μm.

Two or more polymer films may be used such that the optical characteristics of the whole film can satisfy the above requirements.

Re1 and Rth1 values within the above ranges enable the resulting viewing angle improving film for a liquid crystal display device to widen the viewing angle while compensating the color tone of the images and enable the resulting brightness improving film to obtain a sufficient brightness improving effect. When the Re1 value is smaller than 30 nm or larger than 500 nm, sufficient viewing angle improving effect may not be attained or unnecessary coloration may occur when viewing the device obliquely. When the Rth1 value is smaller than 0 nm or larger than 300 nm, sufficient viewing angle improving effect may not be attained or unnecessary coloration may occur when viewing the device obliquely.

Next, the method of forming a liquid crystal layer with a fixed alignment will be described.

An example of a method for forming a liquid crystal layer by developing a liquid crystalline composition on a COP film includes a method wherein a solution of a liquid crystalline composition is coated on a COP film and drying the coated film to remove the solvent. No particular limitation is imposed on the solvent to be used for the preparation of the solution if it can dissolve various compounds used in the liquid crystalline composition and be removed under proper conditions and is less in influence on the COP film. Examples of the solvent include ketones such as acetone, methyl ethyl ketone, isophorone, and cyclohexanone; ether alcohols such as butoxy ethyl alcohol, hexyloxy ethyl alcohol, methoxy-2-propanol, and bezyloxy ethyl alcohol; glycol ethers such as ethylene glycol dimethylether and diethylene glycol dimethyl ether; esters such as ethyl acetate, ethyl lactate and γ-butyrolactone; phenols such as phenol and chlorophenol; amides such as N,N-dimethylformamide, N,N-dimethylacetoamide, and N-methylpyrrolidone; halogens such as chloroform, tetrachloroethane, and dichlorobenzene; and mixtures thereof. Surfactants, defoaming agents, or leveling agents may be added to the solution so as to form a uniform film layer on a COP film.

Regardless of whether the liquid crystalline composition is coated directly or in the form of a solution, no particular limitation is imposed on the method of coating the liquid crystalline composition if the uniformity of the coated film can be maintained, and thus any conventional method may be used. Examples of the coating method include flexographic printing, offset printing, dispensing, gravure coating, kiss coating, microgravure, bar coating, screen printing, lip coating and die coating methods. Preferred are gravure coating, kiss coating, lip coating, and die coating.

Before coating, a surface improving treatment such as corona or plasma treatment may be carried out so as to form a uniform coated film on a COP film.

The coating of a solution of the liquid crystalline composition is preferably followed by a drying step for removal of the solvent after coating. No particular limitation is imposed on the drying step if it can maintain the uniformity of the coated film, which may be any conventional method. For example, a method using a heater (furnace) or a hot air blowing may be used. The thickness of the coated film is adjusted depending on the liquid crystalline composition to be used or the purpose of the liquid crystal layer. However, the thickness after drying is from 0.1 μm to 50 μm, preferably from 0.2 μm to 20 μm, more preferably from 0.3 to 10 μm. A film thickness deviating these ranges is not preferable because the intended advantageous effects can not be obtained and the resulting liquid crystal layer is aligned insufficiently.

The liquid crystal layer formed on the COP film is aligned in a liquid crystal state by a heat treatment or the like and then if necessary cured by photo-irradiation and/or a heat treatment so as to react the reactive group thereby fixing the alignment. During the first heat treatment, the liquid crystalline composition is heated to a temperature in such a range that the liquid crystalline composition exhibits a liquid crystal phase, so as to be aligned by its peculiar self-alignability. The conditions for the heat treatment vary in optimum conditions and limits depending on the liquid crystal

phase behavior temperature (transition temperature) of the liquid crystalline material to be used. However, the heat treatment is conducted at a temperature within the range of usually 10 to 200°C, preferably 30 to 150°C, more preferably at a temperature higher than the Tg of the liquid crystalline composition, more preferably at a temperature higher by 10°C or higher than the Tg of the liquid crystalline composition. A too low temperature is not preferable because there is a possibility that the liquid crystalline composition may not be aligned sufficiently, while a too high temperature is not also preferable because the liquid crystalline composition or the COP film may be adversely affected. The heat treatment is conducted for usually 3 seconds to 30 minutes, preferably 10 seconds to 10 minutes. A heat treatment for shorter than 3 seconds is not preferable because aligning of the liquid crystalline composition may not be completed. Whereas, a heat treatment for longer than 30 minutes is not also preferable because the productivity is diminished.

After the liquid crystal layer is aligned by the above-described method and when the liquid crystalline composition having a reactive group is used, the composition is allowed to exhibit the function of the reaction initiator contained in the composition and to react the reactive group while kept in the aligned state so as to fix the alignment.

In the case where the reaction initiator exhibits the function thereof by light irradiation, the light is emitted from a light source having a spectrum in an absorption wavelength region of the initiator to be used, such as a metal halide lamp, a high-pressure mercury lamp, an ultra high-pressure mercury lamp, a low-pressure mercury lamp, a xenon lamp, an arc discharge lamp, and a laser so as to activate the reaction initiator. The integrated irradiation dose is within the range of generally 10 to 2,000 mJ/cm$^2$, preferably 50 to 1,000 mJ/cm$^2$. However, when the absorption region of the reaction initiator is extremely different from the spectrum of the light source, or the liquid crystalline composition itself can absorb a light in the wavelength of the light source, the irradiation dose is not limited to the above range. In these cases, a method may be employed in which a suitable photo sensitizer or two or more types of reaction initiators having different absorption wavelengths may be used. The temperature upon light emission is preferably within such a range that the liquid crystalline composition is aligned in a liquid crystal phase. Furthermore, the light emission is preferably conducted at a temperature which is equal to or higher than the liquid crystal phase temperature, i.e., Tg of the liquid crystalline composition, in order to enhance the efficiency of the curing sufficiently.

The liquid crystal layer with a fixed alignment is thus formed on a COP film. The liquid crystal layer on the COP film may be protected with a surface protection layer so as to protect the surface of the liquid crystal layer. Examples of the protection layer include protection films of coating type adhesives and polymer films.

Depending on the purpose of the liquid crystal layer, not only the thickness but also the certain retardation value in the thickness direction may be required. In this case, the refractive index in the direction where the maximum refractive index is exhibited in the liquid crystal layer plane is Nx, the refractive index in the direction perpendicular to the direction is Ny, the refractive index in the thickness direction is Nz, and the thickness of the liquid crystal layer is d (nm) . The relation of the refractive indices of a homeotropically aligned liquid crystal layer is usually $Nz>Nx\geq Ny$ and the retardation value in the plane ($Re=(Nx-Ny)xd$ [nm]) is form 0 nm to 50 nm, and the retardation value in the thickness direction ($Rth=\{(Nx+Ny)/2-Nz\}xd$ [nm]) is from -500 nm to -30 nm. Re and Rth are values with respect to a light of a wavelength of 550 nm.

The liquid crystal film may be combined with a polarizer to form a laminate for use as an optical element. Alternatively, the liquid crystal layer may be laminated with other various retardation films. The laminates are usually formed using an adhesive or a tacky adhesive to avoid a polarizer or each film from being out of alignment or deforming.

The above-mentioned polarizer usually has a transparent protection film on one or both surface thereof. No particular limitation is imposed on the polarizer. Therefore, various polarizers may be used. Examples of the polarizer include those produced by stretching uniaxially a hydrophilic polymer film such as a polyvinyl alcohol-based film, a partially formalized polyvinyl alcohol-based film or an ehtylene-vinyl acetate copolymer-based partially saponified film to which a dichroic substance such as iodine or a dichroic dye is allowed to absorb; and polyene-based alignment films such as dehydrochlorinated products of polyvinyl chloride. Among these polarizers, it is suitable to use those produced by stretching and aligning a polyvinyl alcohol-based film to which a dichroic substance (iodine or dye) is allowed to absorb. No particular limitation is imposed on the thickness of the polarizer. It is, however, common to use a polarizer with a thickness of 5 to 80 $\mu$m.

A polarizer absorbing iodine, which has been widely used is produced by continuous longitudinal uniaxial stretching and thus has an absorption axis that is parallel to the longitudinal direction of the rolls. When a conventional elongate polarizer that is longitudinally uniaxial-stretched is laminated with an elongate first optical anisotropic layer by a roll to roll method such that the absorption axis of the polarizer is perpendicular to the slow axis of the first optical anisotropic layer, a transverse stretching machine is preferably used such that the slow axis is perpendicular to the conveying direction.

The polarizer wherein a polyvinyl alcohol film is dyed with iodine and uniaxially stretched may be produced by dipping a polyvinyl alcohol in an aqueous solution of iodine to be dyed and stretching it 3 to 7 times longer than the original length. If necessary, the polyvinyl alcohol-based film may be dipped in a solution of boric acid or potassium iodide. Further if necessary, the polyvinyl alcohol-based film may be washed by dipping it in water before dyeing. Washing of the polyvinyl alcohol-based film can remove stains thereon and a blocking inhibitor and swells the film thereby providing

an effect to prevent uneven dyeing. Stretching may be carried out after or while dyeing with iodine or followed by dyeing with iodine. Alternatively, stretching may be carried out in an aqueous solution of boric acid or iodine or a water bath.

The transparent protection film is preferably a substrate that is optically isotropic. Examples of such a substrate include triacetyl cellulose films such as Fujitac (manufactured by Fuji Photo Film Co., Ltd.) and Konicatac (manufactured by Konica Minolta Opto, Inc.); COP films such as Arton film (manufactured by JSR Corporation), ZEONOR film and Zeonex film (both manufactured by Zeon Corp.); TPX film (manufactured by Mitsui Chemical Inc.); and Acryplene film (manufactured by Mitsubishi Rayon Co., Ltd.). Triacetyl cellulose and COP films are preferably used in view of heat resistance or humidity resistance when they are used for an optical element. The thickness of the transparent protection film is generally 150 μm or less, preferably from 1 to 100 μm, particularly preferably from 5 to 50 μm.

Examples of the above-mentioned various retardation films include polymer films and films formed from liquid crystalline compounds or compositions.

The polymer films are those formed from polymers that can exhibit birefringence. Birefringence polymer films are preferably those having excellent controllability of birefringence characteristics, transparency and heat resistance and small photoelasticity. No particular limitation is imposed on the polymers to be used if they can be uniformly aligned uniaxially or biaxially. However, preferred are polymers that have been conventionally used and can be formed into a film by solution casting or extrusion, such as cycloolefin polymers, polycarbonate, polyarylate, polyester, polyamide, polyimide, polyamideimide, polyetherimide, polyether ketone, polyether sulfone, polysulfone, polystyrene, polyacetal, polyvinyl alcohol, polymethylmethacrylate, cellulose acylate, and polymers wherein two or more of these polymers are mixed.

The thickness of these films is desirously from 10 to 100 μm, particularly desirously form 20 to 80 μm. When a film is too thick, the resulting laminate is too thick and thus it is not preferable in terms of the requirement of the reduced thickness. When a film is too thin, the mechanical strength of the film can not be retained and troubles such as tearing of the film may occur.

Examples of the film wherein a liquid crystalline compound or composition is aligned and fixed include films produced by developing and aligning on a substrate thermotropic liquid crystalline compounds exhibiting liquid crystallinity in a certain temperature range, lyotropic liquid crystalline compounds exhibiting liquid crystallinity in a solution in a certain concentration range thereof, or compositions containing these compounds, and by fixing the alignment. In particular, thermotropic liquid crystalline compounds is often mixed with a plurality of liquid crystalline compounds so that it can exhibit liquid crystallinity within a wide temperature range. The liquid crystalline compound may be that of a low molecular weight, that of a high molecular weight, a mixture thereof.

Examples of the liquid crystal phase of the liquid crystalline compound or composition before being fixed include nematic, twisted nematic, cholesteric, smectic, and discotic nematic phases. Examples of the aligned configuration include homogeneous alignment wherein the compound or composition is aligned parallel to an alignment substrate, homeotropic alignment wherein the compound or composition is aligned vertical to an alignment substrate, tilt alignment that is considered to be an intermediate state therebetween, and hybrid alignment.

These liquid crystalline compounds or compositions may be those polymerized or cross-linked with ultraviolet ray or heat so as to fix them in the aligned state. Examples of such compounds include compounds having a polymerizable group such as (meth)acryloyl, epoxy, vinyl or oxetanyl group and compounds having a reactive functional group such as amino, hydroxyl, carboxyl, or isocyanato group, for example, compounds described in WO97/44703 and WO98/00475.

The thickness of the liquid crystal layer varies on the desired front retardation and retardation in the thickness direction and also the birefringence of the aligned liquid crystalline compound but is preferably from 0.05 to 20 μm, more preferably from 0.1 to 10 μm. A thickness deviating these ranges is not preferable because the intended advantageous effects can not be obtained or the layer is aligned insufficiently.

When the refractive index in the direction where the maximum refractive index is exhibited in the retardation film plane is nx2, the refractive index in the direction perpendicular to the direction is ny2, the refractive index in the thickness direction is nz2, and the thickness of the film is d2 (nm), the retardation value in the plane (Re2) given by (nx2-ny2)xd2 [nm]) is form 20 nm to 1000 nm, more preferably from 50 to 700 nm, more preferably from 70 to 300 nm.

The retardation value in the thickness direction (Rth2) given by {nz2-(nx2+ny2)/2}xd2 [nm] is an absolute vale of 0 nm to 700 nm, preferably 5 to 400 nm, more preferably 10 to 300 nm. Re2 and Rth2 do not necessarily satisfy the above requirements at the same time. Re2 and Rth2 are values measured with a monochromic light of a wavelength of 550 nm.

When a tacky adhesive is used, it may be optically transparent or light diffusive. The tacky adhesive is also referred to as pressure sensitive adhesive, which is a viscoelastic body that adheres to a surface of a substance only by being compressed and can be removed from the surface by peeling, leaving almost no mark or trace if the substance has enough strength. The tacky adhesive may be acrylic-, vinyl chloride-, synthetic rubber-, natural rubber- and silicone-based tacky adhesives. Those that are optically transparent and isotropic selected from these adhesives may be used.

These adhesives may be reactive ones such as those curing by light. Amongst, acrylic-based tacky adhesives are one of the preferable examples because of their handling characteristics and transparency.

When a reactive tacky adhesive is used, it is used under such conditions that the resulting liquid crystal film is not adversely affected and reaction (curing) suitable for reactivity emerges.

No particular limitation is imposed on the method of curing. For example, the tacky adhesive may be cured by heating, redox curing at normal temperature, anaerobic curing, or activation ray curing with ultraviolet ray or electron ray. Preferable curing methods are those using activation rays such as ultraviolet ray or electron ray. Curing methods using activation rays are particularly preferable because the reaction proceeds fast and thus a liquid crystal layer with a fixed alignment is less affected thereby. Curing may be carried out by exposing an adhesive layer to which a photo-polymerization initiator has been added to light from a light source such as a metal halide lamp, a high-pressure mercury lamp, an ultra high-pressure mercury lamp, a low-pressure mercury lamp, a xenon lamp, an arc discharge lamp, a laser or a synchrotron radiation light source. The integrated irradiation dose is within the range of generally 10 to 2, 000 mJ/cm$^2$, preferably 50 to 1, 000 mJ/cm$^2$. However, when the absorption region of the photo-polymerization initiator is extremely different from the spectrum of the light source, or the compound to be reacted itself can absorb a light in the wavelength of the light source, the irradiation dose is not limited to the above range. In these cases, a method may be employed in which a suitable photo sensitizer or two or more types of photo-polymerization initiators having different absorption wavelengths may be used. For the electron radiation curing, the accelerating voltage is usually from 10 kV to 200 kV, preferably from 20 kV to 100 kV.

A light diffusive tacky adhesive is one exhibiting light diffusivity by dispersing fine particles in the above-described tacky adhesives. Examples of the fine particles to be contained so as to allow the tacky adhesive to exhibit light diffusivity include matting agents such as silicon dioxide, titanium dioxide, aluminum dioxide, zirconium oxide, calcium carbonate, talc, clay, fired kaolin, fired calcium silicate, calcium silicate hydrate, aluminum silicate, magnesium silicate and calcium phosphate and polymer particles such as polymethylmethacrylate and polystyrene.

The haze value of the light diffusive tacky adhesive is preferably 20 percent or more, more preferably 40 percent or more, particularly preferably 60 percent or more. The haze is a value defined in JIS K 7105 and given by (diffusive transmissivity/total light ray transmissivity)x100 (%).

The thickness of all of the tacky adhesives is from 0.5 to 50 μm, desirously from 1 to 30 μm, more desirously from 3 to 20 μm. A thickness smaller than this renders it difficult to adhere because the tackiness is likely to be insufficient. A thickness greater than this would cause the adhesive to run off from edges of the film, resulting in defects in the product appearance.

The liquid crystal film or optical element of the present invention can be utilize in liquid crystal cells or liquid crystal display devices of various display modes due to the plane and thickness direction retardations of the liquid crystal layer, COP film or various retardation films, constituting the liquid crystal layer or optical element. Examples of the display mode include TN (Twisted Nematic), IPS (In-Plane Switching), OCB (Optically Compensatory Bend), ECB (Electrically Controlled Birefringence), STN (Supper Twisted Nematic), VA (Vertically Aligned) and HAN (Hybrid-Aligned Nematic) modes.

**Examples**

The present invention will be further described in the following examples, but the present invention should not be construed as being limited thereto.

The analyzing methods used in the examples are as follows.

(1) Measurement of molecular weight

The number average molecular weight (Mn) and weight average molecular weight (Mw) of a liquid crystalline polymer were measured with an ultraviolet detector (wavelength: 254 nm) by dissolving the polymer in tetrahydrofuran used as the eluent using 8020 GPC system manufactured by TOSOH CORPORATION equipped with TSK-GEL Super H1000, Super H2000, Super H3000, and Super H4000 which are connected in series. Polystyrene was used as a standard for calibration of the molecular weight.

(2) Observation through microscope

A liquid crystal aligned state was observed through an Olympus BH2 polarizing microscope.

(3) Measurement of parameters of liquid crystal film

The measurement was carried out using an automatic birefringence analyzer KOBRA21ADH manufactured by Oji Scientific Instruments and a light of a wavelength of 550 nm.

(4) Measurement of interlayer adhesion

A sample strip having a length of 150 mm and a width of 30 mm is cut out from a sample sheet for evaluating interlayer adhesion to measure the 180° peeling strength using a Strograph E-L manufactured by Toyo Seiki Seisaku-sho, LTD. (temperature 23°C, peel velocity 300 mm/min).

[Example 1]

A side chain type liquid crystalline polymer represented by formula (10) below was synthesized by radical polymerization. The molecular weight of the polymer measured with the GPC was in terms of polystyrene, and the weight average molecular weight was 9,700. The representation in formula (10) indicates the structural ratio of each unit but does not mean a block copolymer.

In 9 ml of cyclohexanone were dissolved 0.15 g of an acrylic compound represented by formula (11), 0.77 g of the side chain type liquid crystalline polymer represented by formula (10) and 0.08 g of a dioxetane compound represented by formula (12), followed by addition of 0.1 g of a propylene carbonate solution of 50 percent of triarylsulfonium hexafluoroantimonate (a reagent manufactured by Aldrich Co.) at a dark place and filtration of insolubles with a polytetrafluoroethylene filter with a pore size of 0.45 μm thereby producing a liquid crystalline composition solution.

On an Arton COP film (manufactured by JSR CORPORATION, Re1=100 nm, thickness 28 μm) was spin-coated the resulting solution. The coated COP film was dried on a hot plate kept at 60°C for 10 minutes and heated at 90°C in an oven for 2 minutes thereby aligning the liquid crystal layer. The sample was placed on an aluminum plate heated at 60°C, in contact with each other and exposed to an ultraviolet light of 600 mJ/cm$^2$ (measured at 365 nm) using a high pressure mercury lamp to cure the liquid crystal layer thereby producing a liquid crystal film (liquid crystal layer/COP film).

As the result of observation of the resulting liquid crystal film through a crossed nicols polarizing microscope, it was confirmed that the film was aligned in a monodomain uniform aligned state having no disclination. As the result of similar observation through a crossed nicols polarizing microscope of the film which was tilted and to which a light was made incident obliquely, it was observed that the light transmitted through the film. The optical retardation of the film was measured using an automatic birefringence analyzer KOBRA21ADH. A measuring light was made incident vertically or obliquely to the sample surface. The retardation in the vertical direction with respect to the sample surface was almost zero. When the retardation of this sample was measured from an oblique direction to the slow axis direction of the liquid crystal layer, it was confirmed that a good homeotropic alignment was formed because the retardation value increases as the incident angle of the measuring light increases. Through this measurement, the liquid crystal layer alone estimated to have retardations Re and Rth of 0 nm and -23 nm, respectively.

In order to evaluate the retainability of homeotropic alignment of the liquid crystal film at elevated temperatures, the liquid crystal film, which is a laminate of the liquid crystal layer and COP film was cut into a rectangle shape with a size of 3 cm x 4 cm. After a separator film with a tacky adhesive layer with a thickness of 25 μm was attached to the liquid crystal layer surface and then peeled off, the film was attached to a glass substrate (2 mm thickness) thereby producing a sample film of the glass/tacky adhesive layer/liquid crystal layer/COP film. In order to evaluate the influence caused by variation in the COP film itself, a blank sample of the glass sheet/tacky adhesive/COP film was also produced. The initial Rth value and that after placed for 120 hours under high temperature (90°C dry) conditions, of these samples were measured with KOBRA21ADH. As the result, the variation rate in Rth of the film sample derived by deducting the variation in the blank sample was 0.1 percent. If the variation rate exceeds one percent, the film was evaluated as unacceptable because it is out of the allowable range for use as an optical element. If the variation rate was less than one percent, the film was evaluated as acceptable. Since the variation rate of this film was 0.1 percent, the film was evaluated as acceptable and confirmed to be able to keep excellent retainability of homeotropic alignment for a long period of time even at elevated temperatures.

In order to evaluate adhesion between the liquid crystal layer and COP film of the liquid crystal film, an ultraviolet curing type acrylic adhesive UV-3400 (manufactured by Toagosei Co., Ltd.) was coated on the liquid crystal layer surface of the liquid crystal layer and COP film laminate such that the adhesive layer thickness was 5 μm, and then laminated with a triacetyl cellulose (TAC) film. An ultraviolet light of 600 mJ/cm$^2$ was emitted to the laminate from the TAC film side so as to cure the adhesive thereby producing a sample for evaluating adhesion, having a layer structure of TAC/UV-3400/liquid crystal layer/COP. The interlayer adhesion between the COP film and the liquid crystal layer was measured with the strograph and was found to be 190 N/m on average for the sample number of 3.

Next, the liquid crystal film was evaluated in terms of performances when it is used in an optical element. Specifically, after a separator film with a tacky adhesive layer with a thickness of 25 μm was attached to the COP side of the liquid crystal film, which is a laminate of the liquid crystal layer/COP film and then peeled off, a polarizer (thicknes s of about 180 μm, "SRW062AP7" manufactured by Sumitomo Chemical Co., Ltd.) was laminated on the tacky adhesive layer thereby producing an optical element wherein the polarizer/tacky adhesive/COP film/liquid crystal layer are all combined. Furthermore, a tacky adhesive layer with a thickness of 25 μm was formed on the liquid crystal layer surface

of the optical element and then attached to a glass substrate (2 mm thickness) thereby producing a evaluation sample of the glass substrate/tacky adhesive/COP film/tacky adhesive/polarizer.
Since for a laminate comprising a polarizer, the angle relation between the polarizer and the liquid crystal film largely affects the functions of an optical element comprising such a laminate, lamination of the polarizer may sometimes be redone when the polarizer is shifted or slipped from the liquid crystal layer during the production process. On the assumption of this case, the polarizer was peeled off from the optical element laminate to evaluate whether the polarizer was able to be laminated again. If cohesion failure of the liquid crystal layer or delamination between the liquid crystal layer and COP film is caused by the force generated when the polarizer was peeled off, the polarizer can not be laminated again and this is not preferable for production of a laminated polarizer and thus evaluated as unacceptable. If the polarizer was able to be peeled from the adhesive layer without occurrence of cohesion failure of the liquid crystal layer or delamination between the liquid crystal layer and COP film, the polarizer was able to be laminated again and thus this is evaluated as acceptable. As the result, in the test wherein the sample number was 2, the sample laminates were acceptable because no cohesion failure of the liquid crystal layer occurred. It was, therefore, confirmed that the liquid crystal film was sufficiently high in retainability of homeotropic alignment and adhesion between the COP film and the liquid crystal layer.

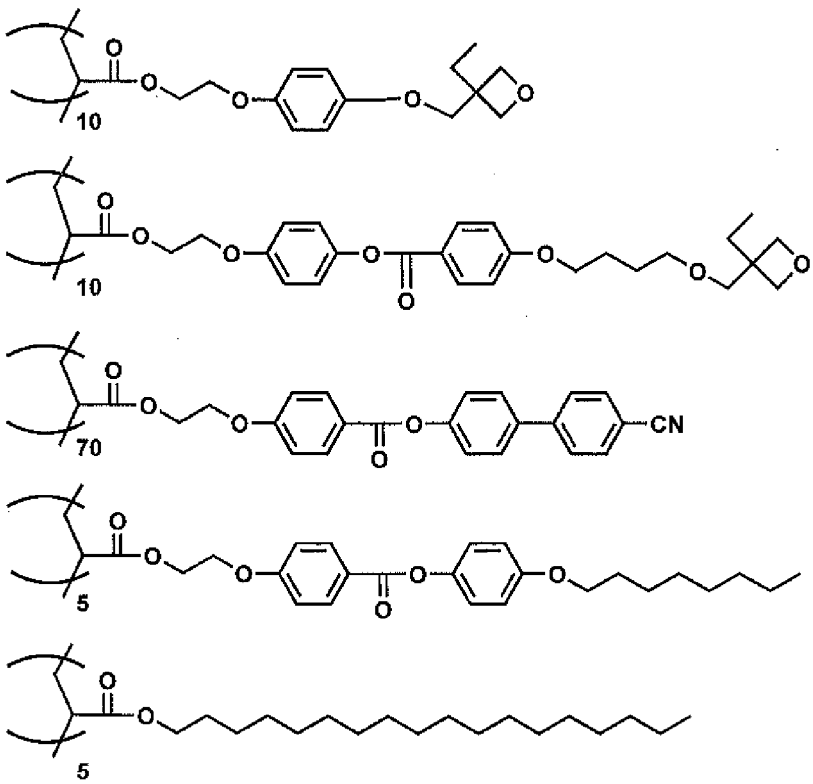

(10)

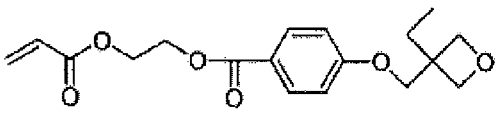

(11)

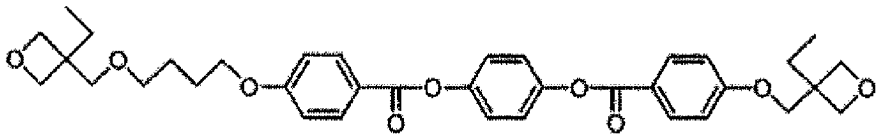

(12)

[Example 2]

A side chain type liquid crystalline polymer represented by formula (13) below was synthesized by radical polymerization. The molecular weight of the polymer measured with the GPC was in terms of polystyrene, and the weight average molecular weight was 9,700.
In 9 ml of cyclohexanone were dissolved 0.1 g of an acrylic compound represented by formula (14) and 0.90 g of the side chain type liquid crystalline polymer represented by formula (13), followed by preparation of a solution of a liquid crystalline composition in the same manner as Example 1. The resulting solution was coated on an ESCENA COP film (manufactured by Sekisui Chemical Co., Ltd., Re1=100 nm, thickness 24 μm) in the same manner as Example 1 thereby producing a liquid crystal film in the form of laminate (liquid crystal layer/COP film).
As the result of observation of the resulting liquid crystal film through a crossed nicols polarizing microscope and measurement of the liquid crystal film using an automatic birefringence analyzer KOBRA21ADH, it was confirmed that a good homeotropic alignment was formed. The liquid crystal layer alone estimated to have retardations Re and Rth of 0 nm and -19 nm, respectively.
Similarly to Example 1, the liquid crystal film was subjected to evaluations of retainability of homeotropic alignment at elevated temperatures, interlayer adhesion between the COP film and the liquid crystal layer, and properties of the liquid crystal film when used as an optical element. With regard to the retainability of homeotropic alignment at elevated temperatures, the variation rate in Rth of the film sample derived by deducting the variation in Rth of the blank sample was 0.5 percent, which was acceptable, and it is thus confirmed that the liquid crystal film was excellent in retainability of homeotropic alignment for a long period of time. The interlayer adhesion between the COP film and the liquid crystal layer was 255 N/m on average for the sample number of 3.
Evaluation of the liquid crystal film as an optical element was acceptable since no cohesion failure of the liquid crystal layer occurred in the test where the sample number was 2. It is thus confirmed that the liquid crystal film was sufficiently high in retainability of homeotropic alignment and interlayer adhesion between the COP film and the liquid crystal layer also when used as an optical element.

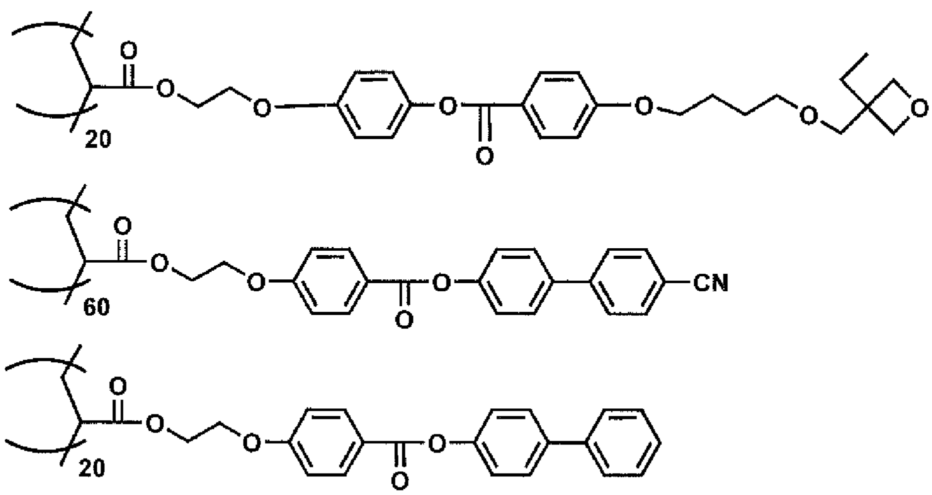

(13)

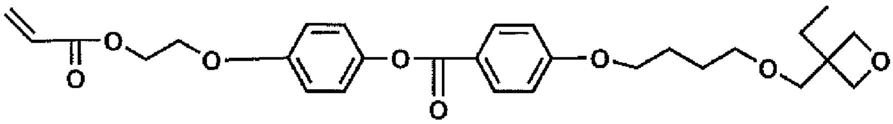

(14)

[Example 3]

In 9 ml of cyclohexanone were dissolved 0.08 g of an acrylic compound represented by formula (11), 0.80 g of a side chain type liquid crystalline polymer represented by formula (13) and 0.12 g of a dioxetane compound represented by formula (12), followed by preparation of a solution of a liquid crystalline composition in the same manner as Example 1. The resulting solution was coated on an ESCENA COP film (manufactured by Sekisui Chemical Co., Ltd., Re1=140 nm, thickness 40 μm) in the same manner as Example 1 thereby producing a liquid crystal film in the form of laminate (liquid crystal layer/COP film) .
As the result of observation of the resulting liquid crystal film through a crossed nicols polarizing microscope and measurement of the liquid crystal film using an automatic birefringence analyzer KOBRA21ADH, it was confirmed that a good homeotropic alignment was formed. The liquid crystal layer alone estimated to have retardations Re and Rth of 0 nm and -40 nm, respectively.
Similarly to Example 1, the liquid crystal film was subjected to evaluations of retainability of homeotropic alignment at elevated temperatures, interlayer adhesion between the COP film and the liquid crystal layer, and properties of the liquid crystal film when used as an optical laminate. With regard to the retainability of homeotropic alignment at elevated temperatures, the variation rate in Rth of the film sample derived by deducting the variation in Rth of the blank sample was 0.6 percent, which was acceptable, and it is thus confirmed that the liquid crystal film was excellent in retainability of homeotropic alignment for a long period of time. The interlayer adhesion between the COP film and the liquid crystal layer was 144 N/m on average for the sample number of 3.
Evaluation of the liquid crystal film as an optical element was acceptable since no cohesion failure of the liquid crystal layer occurred in the test where the sample number was 2. It is thus confirmed that the liquid crystal film was sufficiently high in retainability of homeotropic alignment and interlayer adhesion between the COP film and the liquid crystal layer also when used as an optical element.

[Comparative Example 1]

In 9 ml of cyclohexanone were dissolved 0.90 g of a side chain type liquid crystalline polymer represented by formula (10) and 0.10 g of a dioxetane compound represented by formula (12), followed by preparation of a solution of a liquid crystalline composition in the same manner as Example 1. The resulting solution was coated on an ARTON COP film (manufactured by JSR CORPORATION, Re1=100 nm, thickness 28 μm) in the same manner as Example 1 thereby producing a liquid crystal film in the form of laminate (liquid crystal layer/COP film).
As the result of observation of the resulting liquid crystal film through a crossed nicols polarizing microscope and measurement of the liquid crystal film using an automatic birefringence analyzer KOBRA21ADH, it was confirmed that a good homeotropic alignment was formed. The liquid crystal layer alone estimated to have retardations Re and Rth of 0 nm and -24 nm, respectively.
Similarly to Example 1, the liquid crystal film was subjected to evaluations of retainability of homeotropic alignment at elevated temperatures, interlayer adhesion between the COP film and the liquid crystal layer, and properties of the liquid crystal film when used as an optical laminate. With regard to the retainability of homeotropic alignment at elevated temperatures, the variation rate in Rth of the sample film derived by deducting the variation in Rth of the blank sample was 1.3 percent, which was not acceptable, and it is thus confirmed that the liquid crystal film was insufficient in retainability of homeotropic alignment for a long period of time. The interlayer adhesion between the COP film and the liquid crystal layer was 32 N/m on average for the sample number of 3.
The liquid crystal film was evaluated for properties as an optical element in the same manner as Example 1. This optical element was not acceptable because partial cohesion failure of the liquid crystal layer and delamination between the liquid crystal layer and COP film occurred in the test where the sample number was 2. That is, it is revealed that the liquid crystal film was insufficient in retainability of homeotropic alignment and interlayer adhesion between the COP film and the liquid crystal layer.

## Industrial Applicability

The liquid crystal film of the present invention is excellent in alignment retainability of the liquid crystal layer and interlayer adhesion between the liquid crystal layer and a COP film, and also excellent in high temperature durability when it is formed into a laminate (optical element)by being combined with a polarizer and other retardation films, and thus are useful in improving the display quality of various liquid crystal display devices.

## Claims

1. A liquid crystal film comprising a liquid crystal layer aligned homeotropically and then fixed directly on a cycloolefin polymer film having no alignment film, the liquid crystal layer being formed by aligning homeotropically a liquid crystalline composition containing a (meth)acrylic compound having an oxetane group and fixing the composition in a homeotropic alignment by polymerizing the oxetane group.

2. The liquid crystal film according to claim 1, wherein the (meth)acrylic compound having an oxetane group is one or more compounds selected from those represented by formulas (1), (2) and (3):

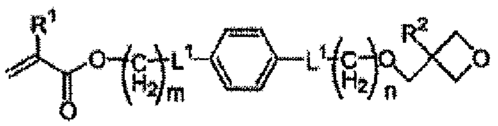
(1)

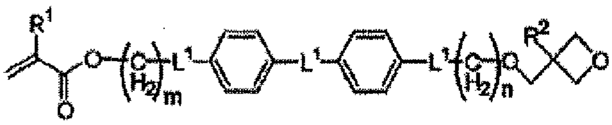
(2)

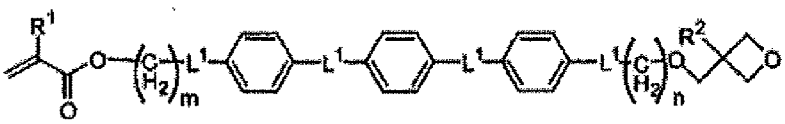
(3)

wherein each $R^1$ is independently hydrogen or methyl, each $R^2$ is independently hydrogen, methyl or ethyl, each $L^1$ is independently a single bond, -O-, -O-CO- or -CO-O-, m is independently an integer of 1 to 10, and n is independently an integer of 0 to 10.

3. The liquid crystal film according to claim 1, wherein the homeotropically aligned liquid crystal layer satisfies the following requirements (a) and (b):

$$(a)\ 0\ nm \leq Re \leq 50\ nm$$

$$(b)\ -500\ nm \leq Rth \leq -30\ nm$$

wherein Re is the retardation value in the plane of the homeotropically aligned liquid crystal layer, Rth is the retardation value in the thickness direction of the homeotropically aligned liquid crystal layer, and the Re and Rth are given by Re=(Nx-Ny)xd [nm] and Rth={(Nx+Ny)/2-Nz}xd [nm], respectively wherein d is the thickness of the homeotropically aligned liquid crystal layer, Nx and Ny are the main refractive indices in the plane of the homeotropically aligned liquid crystal layer, Nz is the main refractive index in the thickness direction of the homeotropically aligned liquid

crystal layer, and Nz>Nx≥NY.

**4.** The liquid crystal film according to claim 1, wherein the liquid crystalline composition containing a (meth)acrylic compound having an oxetane group contains a photo cation generator and/or a thermal cation generator.

**5.** An optical element produced using the liquid crystal film according to any of claims 1 to 4.

**INTERNATIONAL SEARCH REPORT**

International application No.
PCT/JP2010/001728

A. CLASSIFICATION OF SUBJECT MATTER
*G02B5/30*(2006.01)i, *G02F1/13363*(2006.01)n

According to International Patent Classification (IPC) or to both national classification and IPC

B. FIELDS SEARCHED

Minimum documentation searched (classification system followed by classification symbols)
G02B5/30, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-9346 A (Dainippon Printing Co., Ltd.), 17 January 2008 (17.01.2008), claims; paragraphs [0011], [0044], [0047], [0054], [0080] (Family: none) | 1,3,5<br>2,4 |
| Y | JP 2008-145836 A (Nippon Oil Corp.), 26 June 2008 (26.06.2008), claims; paragraphs [0056] to [0062], [0084], [0085] (Family: none) | 2,4 |
| Y | JP 2007-286278 A (Nippon Oil Corp.), 01 November 2007 (01.11.2007), claims; paragraphs [0065] to [0076], [0096], [0097] (Family: none) | 2,4 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 May, 2010 (11.05.10) | 25 May, 2010 (25.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/001728

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-333642 A (Nitto Denko Corp.), 22 November 2002 (22.11.2002), claims; paragraphs [0008], [0026], [0045] & US 2002/0036739 A1 & NL 1019506 C & KR 10-2002-0045547 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2853064 B
- JP 3018120 B
- JP 3788734 B
- JP 4174192 B
- JP 2008009328 A
- JP 2008009346 A
- WO 9744703 A
- WO 9800475 A